# EUROPEAN PATENT SPECIFICATION

(11) **EP 0 643 905 B1**
(45) Date of publication and mention of the grant of the patent: **18.10.2000**
(21) Application number: 94117827.9
(22) Date of filing: 11.04.1991
(51) Int. Cl.: A01D 34/82, A01D 34/71, A01D 43/063

(54) **Lawn mower**
Rasenmäher
Tondeuses à gazon

(30) Priority: 17.04.1990 GB 9008569
(43) Date of publication of application: 22.03.1995
(62) Divisional of application: 91303228.0
(73) Proprietor: ELECTROLUX NORTHERN LIMITED, Newton Aycliffe Co. Durham, DL5 6UP (GB)
(72) Inventor: Dunn, Ken, Mowden Park, Darlington (GB)
(74) Representative: Wright, Howard Hugh Burnby

(56) References cited:
- EP-A- 0 037 871
- EP-A- 0 318 901
- EP-A- 0 457 433
- DE-A- 2 930 042
- GB-A- 1 240 277
- GB-A- 2 024 589
- GB-A- 2 127 665
- JP-A- 1 225 413
- US-A- 3 838 558
- US-A- 4 043 100
- US-A- 4 081 947

## Description

This invention relates to lawn mowers, and in particular to rotary lawn mowers having a grass collector and one or more cutting blades mounted for rotation during operation about a generally vertical axis. Generally speaking, there are two main categories of rotary lawn mower, namely (1) a hover-type rotary lawn mower which, when operative is supported by a cushion of air, and (2) a rotary mower which is supported on wheels and which may include a rear roller for producing a striped effect on a mown lawn.

Mowers falling under category (1) are manually propelled by a user whereas mowers falling under category (2) may be either manually propelled by a user or propelled by a drive-line taken from a power unit connectable via a clutch to one or more wheels or a roller system. In the latter case the power unit combines the functions of driving the rotatable cutting blade(s) and the mower per se.

Mowers falling within either category may be driven directly or indirectly by either an i/c engine or an electric motor.

A mower falling under category (1) is disclosed in GB2127665. This lawn mower is an air supported mower arranged to pick-up and store grass cuttings. As such, it includes a hood defining a cutting chamber within which a cutter member is mounted for rotation in a substantially horizontal plane. A motor drives the cutter member and an impeller via a drive line whereby the impeller directs air beneath the hood to support the mower. Movement of the mower is controlled by a handle. A vacuum or low pressure chamber is used so that air which is being drawn into the impeller of the hover machine is drawn therethrough carrying with it cuttings and debris which are deposited within the vacuum or low pressure chamber. A removable receptacle can be installed for receiving cut grass. The chamber includes an inlet through which cut grass enters, and an outlet through which air is drawn by the impeller.

A lawn mower according to the present invention comprises a hood, a cutting chamber formed within the hood, a cutter member mounted for rotation in a substantially horizontal plane within the cutting chamber, a handle for controlling directional movement of the mower, a power source, a drive line for drivingly connecting the power source to the cutter member, an impeller drivingly connected to the power source, and a grass collector. The grass collector includes a body mounted on the hood and a removable air-permeable container for receiving grass disposed within and in spaced relationship with the collector body to define a space therebetween, the grass collector body including an inlet communicating with the container through which cut grass enters the container, and an outlet through which air may be drawn through the container by the impeller, the said space between the collector body and the container forming a passage for leading air exiting the container to the outlet.

According to one embodiment, the removable air-permeable container is a bag.

Preferably, the grass collector body is mounted on the hood, substantially within the circumferential extent of the hood.

Advantageously, the inlet to the grass collector body is, in use, disposed behind the hood directed towards the ground.

Conveniently, the grass collector includes an opening, closable with a lid, through which the removable air-permeable container is removable and insertable.

The grass collector body may include a second inlet and a suction hoze attachable thereto for suction collection of debris there through.

The removable container may be a disposable unit which includes means sealingly cooperable with the grass collector body inlet. Such a sealing means may include a hollow cone attached to a removable container, and wherein the collector body inlet has a conical shape or similar configuration to that of the hollow cone for sealingly cooperating therewith.

It is preferred that cut-grass entrained in a stream of air created by the impeller is collected in the container, and air substantially free of cut-grass passes through the impeller.

Embodiments of grass collectors in accordance with the present invention are illustrated in the accompanying drawings in which:
Figure 1 is a sectional side view of a lawn mower having a grass collector according to the present invention; Figures 1A, 1B, 1C and 1D show various aspects of the embodiment shown in Figure 1;
Figure 2 which is a sectional side view in which the collection box is detached from the hood of the mower;
Figure 3 is a side view of a fully assembled lawnmower;
Figure 4 is a view of the lawn mower in a disassembled form, and
Figures 5 to 9 show various views of wheeled lawn mowers having grass collectors, according to the present invention.

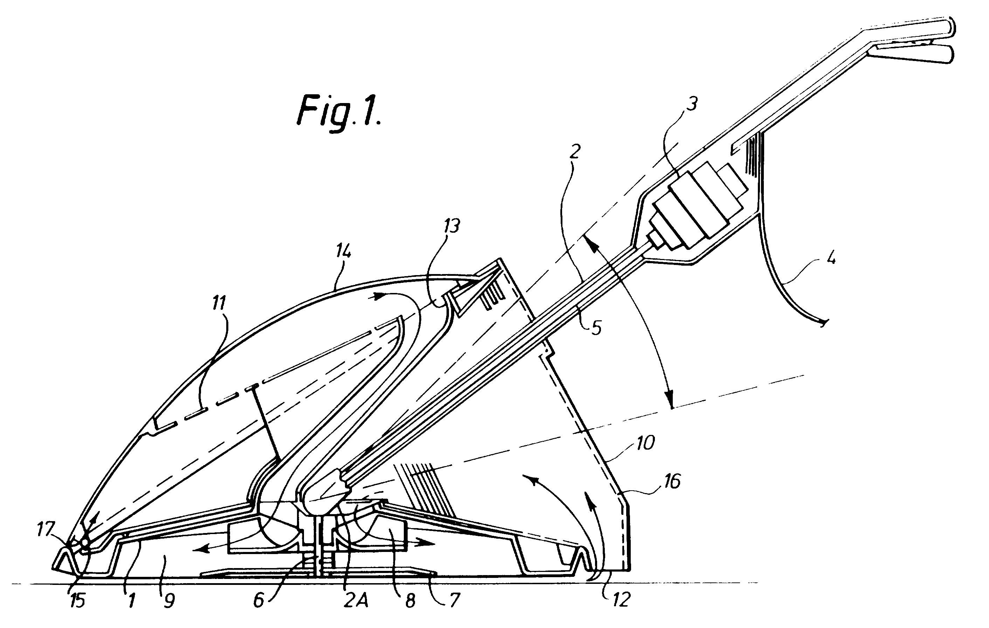

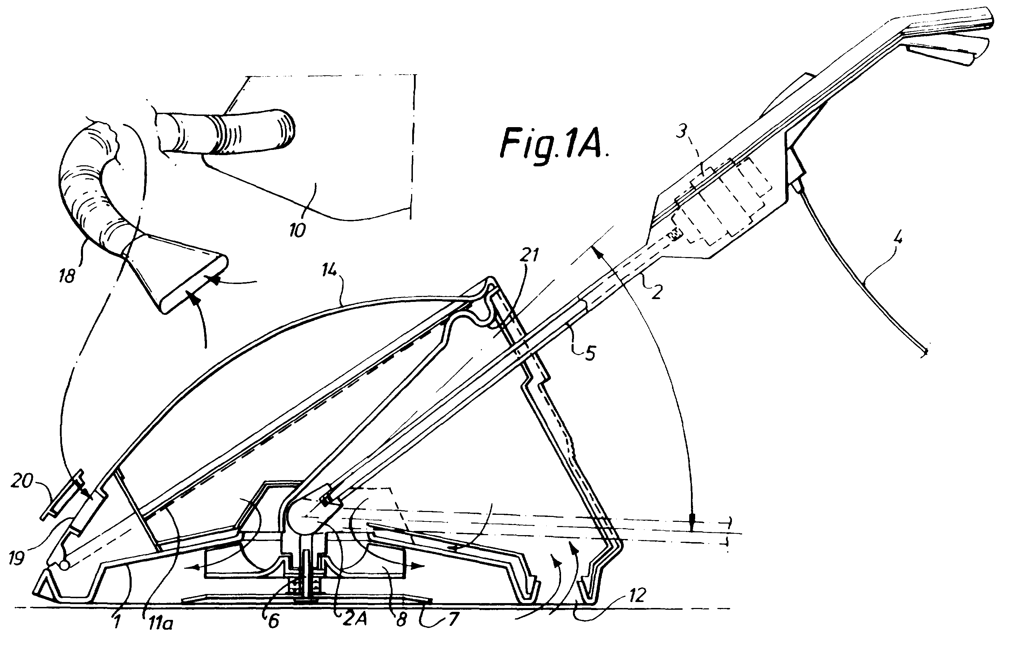

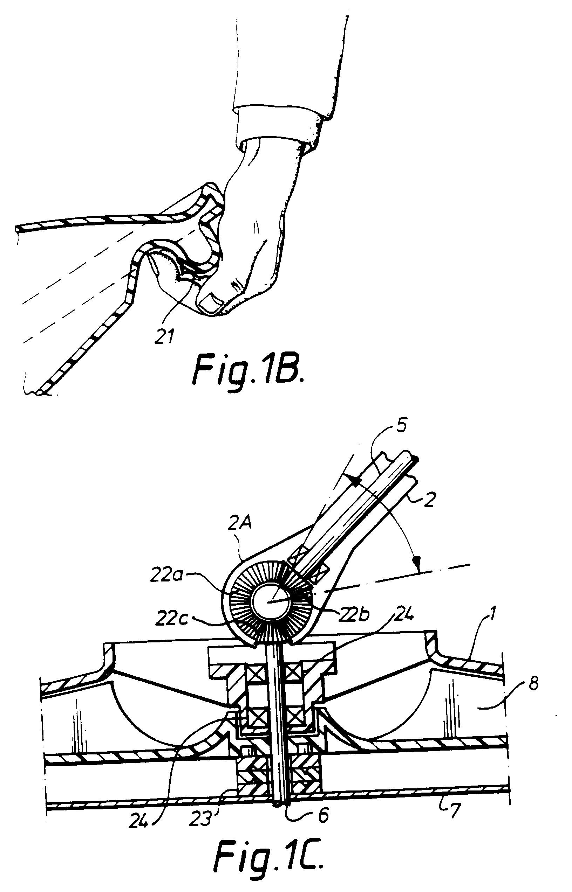

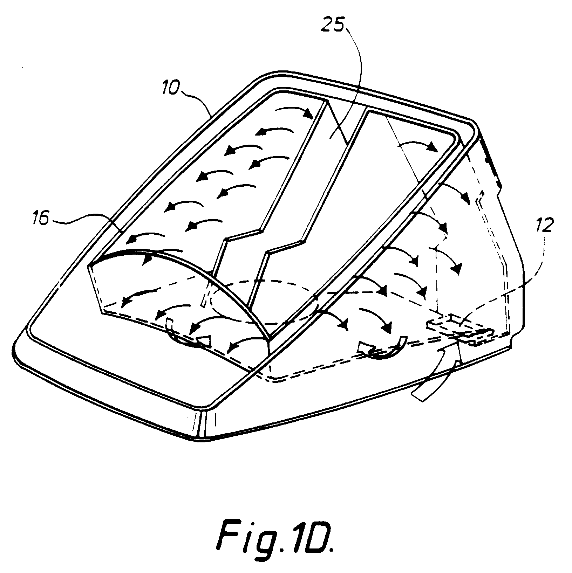

Referring to Figure 1, a hood 1 in the form of an inverted dish is pivotally connected to lower end 2A of a handle 2. The handle 2 supports an electric motor 3 that is powered by an electric current supplied by a cable 4. The electric motor 3 is connected via a drive line 5, within the handle 2, to a drive shaft 6 on which is mounted a rotatable cutting blade 7 and an impeller 8, both contained within a plenum chamber 9 of the hood 1. A grass box 10 is supported on the hood 1 as shown and includes a filter grid 11, an inlet 12, air outlet 13, a lid 14 hingedly supported at 15 from the hood 1 and a removable container 16 (shown in outline) for collecting cut grass. In use, air is drawn through inlet apertures 17 by the impeller 8 to create a cushion of air to support the mower. In addition air is drawn into the grass box 10 by operation of the impeller 8 through inlet 12, grid 11 and air outlet 13. The suction created within the grass box 10 draws grass cuttings and other debris into the box through inlet 12 where it is collected in the disposable container 16.

Referring to figure 1A, (where like components are designated with the same reference numbers as figure 1), in addition to drawing debris and grass cutting into the box 10 through inlet 12, debris can be collected while the handle 2 is released by the attachment of a suction hose 18 to an aperture 19 formed on the exterior of the grass box 10 between the air inlet apertures 17 and the grid 11a. When not in use, such an aperture can be sealed with an air-tight cap 20.

The grass box 10 can be removed from the hood 1 of one mower by hand by gripping the box along the contour 21, as shown more clearly in figure 1B.

Referring to figure 1C, rotational energy from the drive line 5 is transmitted to the drive shaft 6 to a drive the cutting blade and impeller 8 by means of bevel gears 22a, 22b and 22c. Gear 22a is constrained to rotate about the pivotable axis of the handle 2, and gears 22b and 22c are respectively fixed to the drive line 5 and drive shaft 6. The drive shaft 6 is held in substantially vertical alignment by means of washers 24. The height of the cutting blade 7 relative to the ground datum can be varied by inserting or removing spacing discs 23 along the dirve shaft 6 between the blade 7 and the impellers.

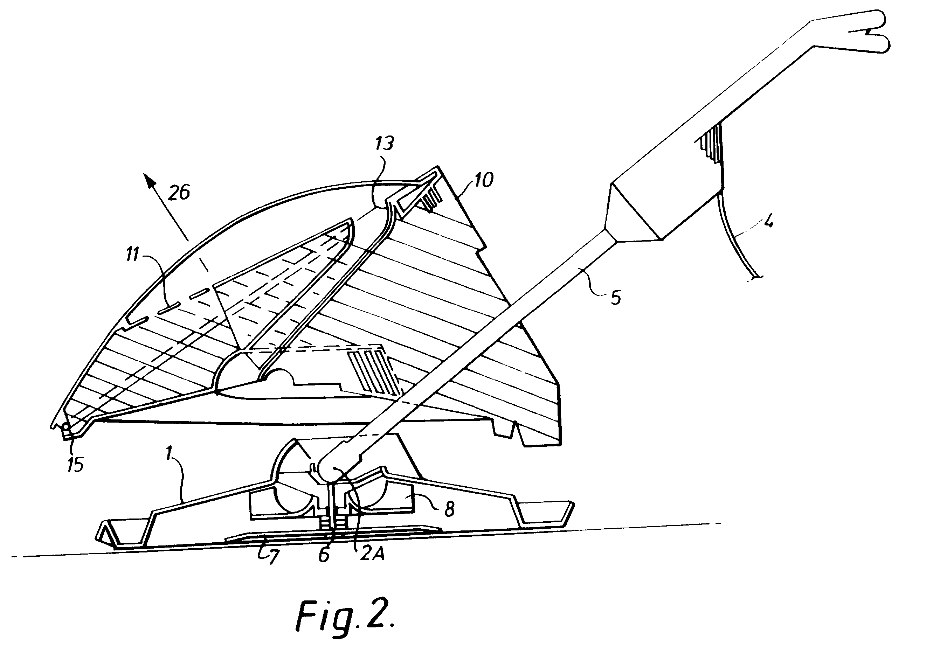

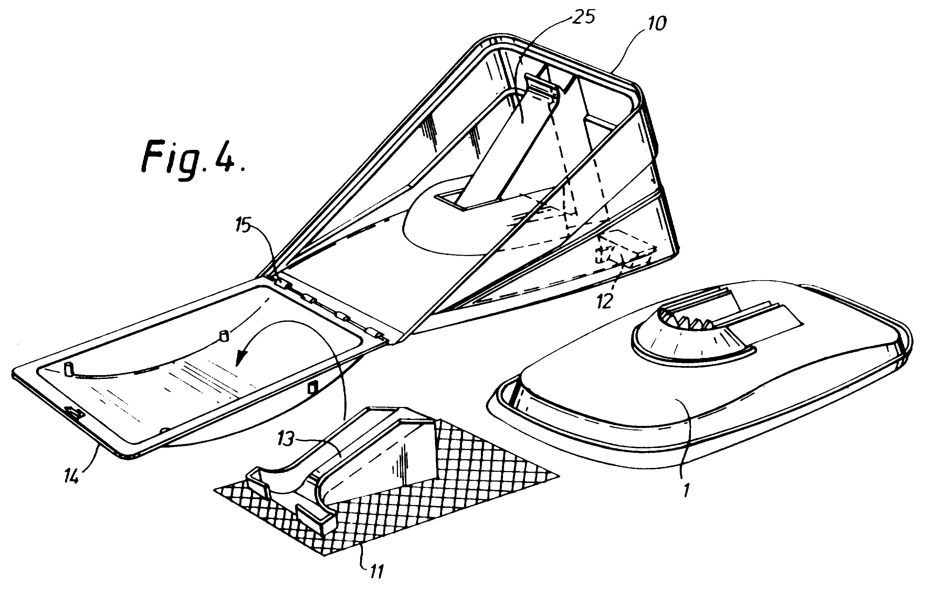

Refering to figure 1D, the grass box 10 has a slot 25 (also shown in fig. 4) in order to accomodate and permit up and down arcuate movement of the handle 2 when the grass box is mounted on the hood 1 of the mower. Air and debis is sucked into the grass box 10 through the inlet aperture 12 disposed rearwardly of the hood 1. Grass cuttings and debris can be collected in the removable container 16 supported in spaced relationship within the grass collector box 10 as shown. The container 16 is permeable to air, allowing air to flow (as shown) our of it where it can be sucked back into the impeller, and can be of a disposable kind. Referring to figure 2, the grass collector box 10 is detached from the hood 1 of the mower in a generally upward direction 26. Collected debris and grass cuttings accumulate within the volume of the box indicated by the hatching.

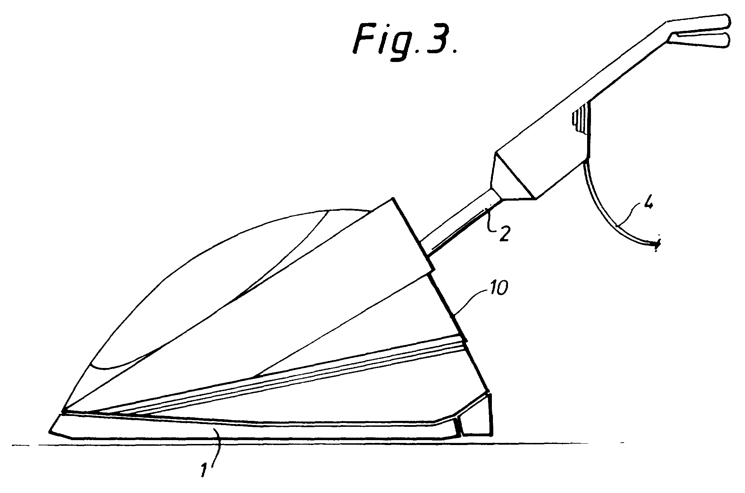

Referring to figure 3, the appearance of the mower with the grass collector box 10 mounted on the hood 1 is as shown.

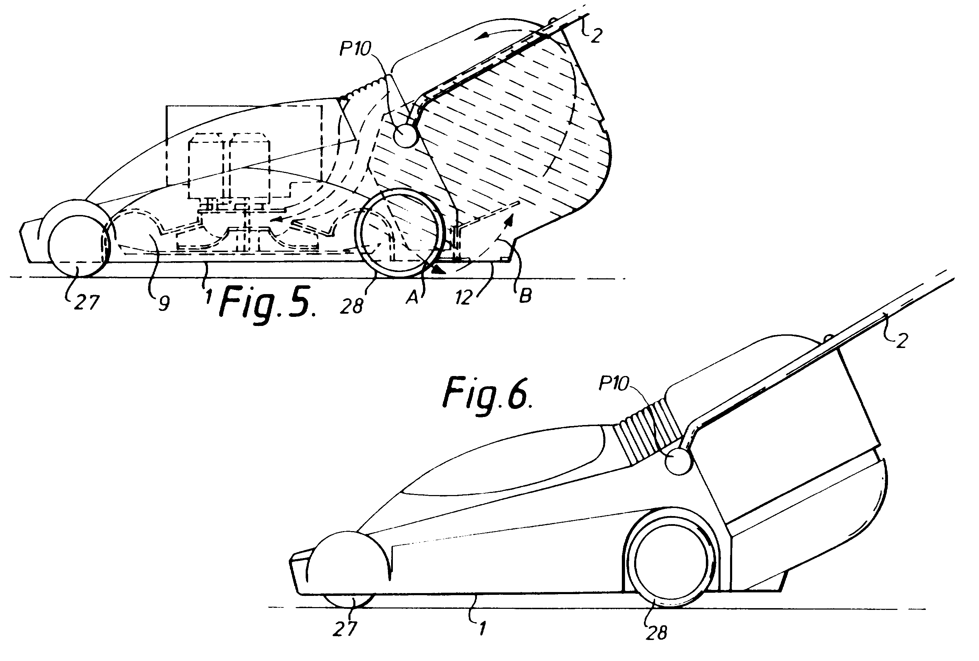

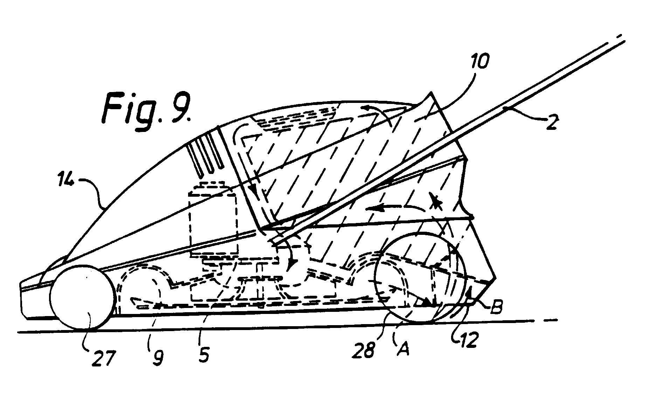

Referring to figure 4, the grass box 10 is opened up from the lid 14 enabling cut grass and collected debris and/or removable container to be removed thereform. The grid 11 is inserted into the grass box 10 by first inserting it into the interior of the lid as shown, and then closing the lid. Figure 5 (where like components are designated with the same reference numbers), shows a further embodiment of the invention in which the mower is supported on forward and rearward wheels, 27 and 28 respectively. To assist manoeuvrability front wheels 27 may be in the form of conventional casters. In particular, the wheels 28 are disposed outside the plenum chamber 9 of the hood 1, as shown more clearly in figures 5 and 6. In common with our former designs of wheeled or otherwise supported rotary lawn mowers, the plenum chamber 9 of the embodiments of Figures 5 to 9 are in the form of a semi toroid from which grass may be directed via a conventional rear chute into the grass collector 16. Alternatively, as shown in Figures 5 and 9, mown grass is directed firstly downwardly in the direction of arrow A and thence upwardly by suction in the direction of arrow B into the grass box via inlet 12. The air circulation or suction system is shown by arrows in Figures 5 and 9 and operates in substantially the same manner as previously described with reference to Figure 1.

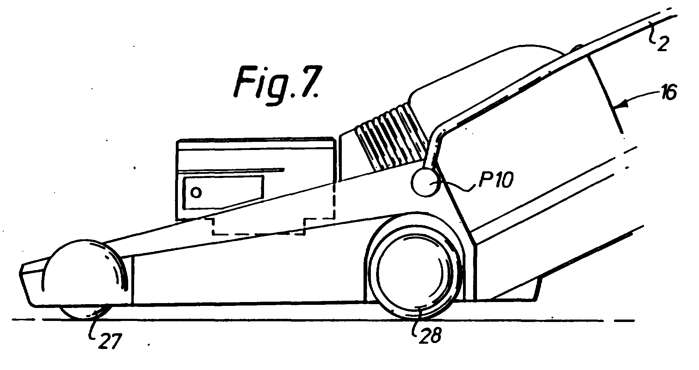

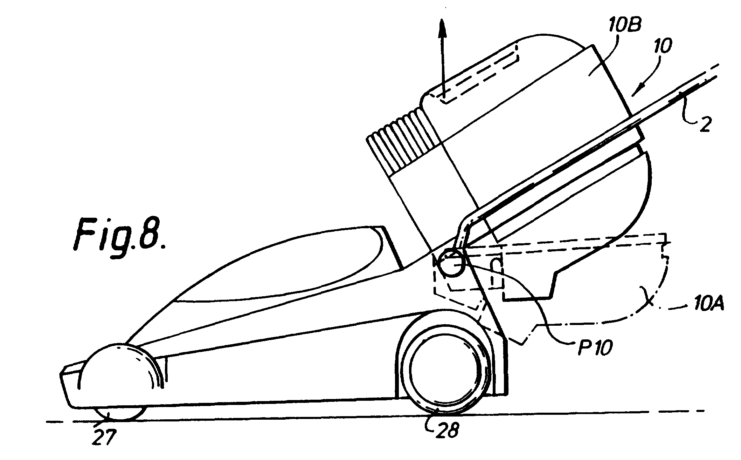

Figures 7 and 8 illustrate an I/C engined and an electrically powered lawn mower respectively, each having a two part (10A, 10B) grass collector box 10 which is hinged about the same hinge pivots P10 as control handle 2. Referring to Figure 8, part 10A is shown in phantom in a position from which part 10B containing grass cuttings has been removed.

## Claims

1. A rotary lawn mower comprising a hood, a cutting chamber formed within the hood (1), a cutter member (7) mounted for rotation in a substantially horizontal plane within the cutting chamber, a handle (2) for controlling directional movement of the mower, a power source (3), a drive line (5) for drivingly connecting the power source (3) to the cutter member (7), an impeller (8) drivingly connected to the power source (3),and
a grass collector (10) including a body mounted on the hood and a removable air- permeable container (16) for receiving cut grass disposed within and in spaced relationship with the collector body to define a space therebetween, the grass collector body including an inlet (12) communicating with the container through which cut grass enters the container (16), and an outlet (13) through which air may be drawn through the container (16) by the impeller (8), the said space between the collector body and the container (16) forming a passage for leading air exiting the container (16) to the outlet (13).

2. A lawn mower according to claim 1, wherein the removable air-permeable container (16) is a bag.

3. A lawn mower according to either claim 1 or claim 2, wherein the grass collector body is mounted on the hood (1), substantially within the circumferential extent of the hood (1).

4. A lawn mower according to any one of the preceding claims, wherein the inlet (12) to the grass collector body is, in use, disposed behind the hood (1) directed towards the ground.

5. A lawn mower according to any one of the preceding claims, wherein the grass collector (10) includes an opening, closeable with a lid (14), through which the removable air-permeable container (16) is removable and insertable.

6. A lawn mower according to any one of the preceding claims, wherein the grass collector body includes a second inlet (19), and a suction hose (18) attachable thereto for suction collection of debris therethrough.

7. A lawn mower according to any one of the preceding claims, wherein the removable container (16) is a disposable unit and includes means sealingly co-operable with the grass collector body inlet.

8. A lawn mower according to claim 7, wherein the sealing means includes a hollow cone attached to the removable container, and wherein the collector body inlet has a conical shape of similar configuration to that of the hollow cone for sealingly cooperating therewith.

9. A lawn mower according to any one of the preceding claims, wherein cut grass entrained in a stream of air created by the impeller (8) is collected in the container (16), and air substantially free of cut grass passes through the impeller (8).

10. A lawn mower according to any one of the preceding claims, wherein the grass collector body is removable from the hood (1).

## Patentansprüche

1. Rasenmäher mit rotierendem Messerwerk, bestehend aus
einer Haube, einer Schneidkammer, die innerhalb der Haube (1) gebildet ist, einem Schneidelement (7), das drehbar in einer im wesentlichen horizontalen Ebene innerhalb der Schneidkammer montiert ist, einer Handhabe (2) zur Steuerung der Bewegungsrichtung des Mähers, einer Antriebsquelle (3), einem Antriebsstrang (5) für eine antriebsmäßige Verbindung der Antriebsquelle (3) mit dem Schneidelement (7), einem Gebläserad (8), das antriebsmäßig mit der Antriebsquelle (3) verbunden ist, und aus
einer Grassammeleinrichtung (10) mit einem auf der Haube montierten Aufbau und einem entfernbaren luftdurchlässigen Behälter (16) zur Aufnahme von geschnittenem Gras, der innerhalb und in beabstandeter Zuordnung des Aufbaus der Sammeleinrichtung zur Bildung eines Zwischenraums zwischen diesen angeordnet ist, wobei der Grassammeleinrichtungsaufbau einen mit dem Behälter kommunizierenden Einlaß (12), durch den geschnittenes Gras in den Behälter (16) eintritt, und einen Auslaß (13) aufweist, durch den Luft durch den Behälter (16) mittels des Gebläserades ansaugbar ist, wobei der Raum zwischen dem Sammeleinrichnungsaufbau und dem Behälter (16) einen Kanal zum Leiten von Luft bildet, die den Behälter (16) zu dem Auslaß (13) verläßt.

2. Rasenmäher nach Anspruch 1, bei dem der entfernbare luftdurchlässige Behälter (16) ein Beutel ist.

3. Rasenmäher nach Anspruch 1 oder 2, bei dem der Grassammeleinrichtungsaufbau auf der Haube (1) im wesentlichen innerhalb der umfänglichen Erstreckung der Haube (1) montiert ist.

4. Rasenmäher nach einem der vorangehenden Ansprüche, bei dem der Einlaß (12) zu dem Grassammeleinrichtungsaufbau in Gebrauch hinter der zum Boden gerichteten Haube (1) angeordnet ist.

5. Rasenmäher nach einem der vorangehenden Ansprüche, bei dem die Grassammeleinrichtung (10) eine mit einem Deckel (14) verschließbare Öffnung aufweist, durch welche der entfernbare luftdurchlässige Behälter (16) entfernbar und einsetzbar ist.

6. Rasenmäher nach einem der vorangehenden Ansprüche, bei dem der Grassammeleinrichtungsaufbau einen zweiten Einlaß (19) und einen Saugschlauch (18) aufweist welcher an diesen zum Absaugen von Überbleibseln durch denselben anbringbar ist.

7. Rasenmäher nach einem der vorangehenden Ansprüche, bei dem der entfernbare Behälter (16) eine Einwegeinheit ist und eine Einrichtung aufweist, die mit dem Einlaß des Grassammeleinrichtungsaufbaus dichtend zusammenwirkt.

8. Rasenmäher nach Anspruch 7, bei dem die Dichtungseinrichtung einen hohlen Kegel aufweist, der an dem entfernbaren Behälter angebracht ist, und wobei der Einlaß des Sammeleinrichtungsaufbaus eine konische Form ähnlicher Konfiguration zu der des hohlen Kegels zum dichtenden Zusammenwirken mit diesem aufweist.

9. Rasenmäher nach einem der vorangehenden Ansprüche, bei dem geschnittenes Gras, das in einem im Gebläserad (8) erzeugten Luftstrom mitgerissen wird, in dem Behälter (16) gesammelt wird und Luft, die im wesentlichen frei von geschnittenem Gras ist, durch das Gebläserad (8) tritt.

10. Rasenmäher nach einem der vorangehenden Ansprüche, bei dem der Grassammeleinrichtungsaufbau von der Haube (1) entfernbar ist.

## Revendications

1. Tondeuse à gazon rotative comportant un capot, une chambre de coupe formée à l'intérieur du capot (1), un élément de coupe (7) monté de manière à pouvoir tourner dans un plan essentiellement horizontal à l'intérieur de la chambre de coupe, une poignée (2) pour commander le déplacement directionnel de la tondeuse, une source de puissance (3), une ligne de commande (5) pour connecter selon une liaison d'entraînement, la source de puissance (3) à l'élément de coupe (7), un rotor (8) relié selon une liaison d'entraînement à la source de puissance (3) et
un collecteur d'herbe (10) comprenant un corps monté sur le capot et un récipient amovible perméable à l'air (16) pour recevoir l'herbe coupée disposé à l'intérieur du corps du collecteur en étant écarté de ce dernier de manière à définir un espace entre le récipient et le corps du collecteur, le corps du collecteur d'herbe comprenant une entrée (12) communiquant avec le récipient et par laquelle l'herbe coupée pénètre dans le récipient (16), et une sortie (13) par laquelle de l'air peut être aspiré à travers le récipient (16) par le rotor (8), ledit espace entre le corps du collecteur et le récipient (16) formant un passage servant à guider l'air sortant du récipient (16) en direction de la sortie (13).

2. Tondeuse à gazon selon la revendication 1, dans laquelle le récipient amovible perméable à l'air (16) est un sac.

3. Tondeuse à gazon selon la revendication 1 ou la revendication 2, dans laquelle le corps du collecteur d'herbe est monté sur le capot (1) essentiellement à l'intérieur des limites circonférentielles du capot (1).

4. Tondeuse à gazon selon l'une quelconque des revendications précédentes, dans laquelle l'entrée (12) débouchant dans le corps du collecteur d'herbe est disposée, en fonctionnement, en arrière du capot (1) en étant dirigée vers le sol.

5. Tondeuse à gazon selon l'une quelconque des revendications précédentes, dans laquelle le collecteur d'herbe (10) comprend une ouverture pouvant être formée par un couvercle (14) et au moyen de laquelle le récipient amovible (16) perméable à l'air peut être retiré et inséré.

6. Tondeuse à gazon selon l'une quelconque des revendications précédentes, dans laquelle le corps du collecteur d'herbe comprend une seconde entrée (19) et un tuyau d'aspiration (18) pouvant être fixé à cette entrée pour collecter des débris par aspiration.

7. Tondeuse à gazon selon l'une quelconque des revendications précédentes, dans laquelle le récipient amovible (16) est une unité jetable et contient des moyens aptes à coopérer, d'une manière étanche, avec l'entrée du corps du collecteur d'herbe.

8. Tondeuse à gazon selon la revendication 7, dans laquelle les moyens d'étanchéité comprennent un cône creux fixé au récipient amovible, et dans laquelle l'entrée du corps du collecteur possède une forme conique ayant une configuration similaire à celle du cône creux pour coopérer de façon étanche avec ce dernier.

9. Tondeuse à gazon selon l'une des revendications précédentes, dans laquelle de l'herbe coupée entraînée dans un courant d'air créé par le rotor (8) est collectée dans le récipient (16), et de l'air essentiellement exempt d'herbe coupée traverse le rotor (8).

10. Tondeuse à gazon selon l'une des revendications précédentes, dans laquelle le corps du collecteur d'herbe peut être retiré du capot (1).
